# EUROPÄISCHE PATENTSCHRIFT

(11) **EP 0 742 970 B1**
(45) Veröffentlichungstag und Bekanntmachung des Hinweises auf die Patenterteilung: **22.10.1997**
(21) Anmeldenummer: 94906125.3
(22) Anmeldetag: 31.01.1994
(51) Int. Cl.: H02P 3/18

(54) **VERFAHREN MIT PHASENANSCHNITTSTEUERUNG ZUM SANFTAUSLAUF EINES ANTRIEBS**
PHASE-CONTROL METHOD FOR STOPPING A DRIVE SMOOTHLY
PROCEDE AVEC COMMANDE DE RETARD DE PHASE POUR ARRETER EN DOUCEUR UN DISPOSITIF D'ENTRAINEMENT

(43) Veröffentlichungstag der Anmeldung: 20.11.1996
(73) Patentinhaber: SIEMENS AKTIENGESELLSCHAFT, 80333 München (DE)
(72) Erfinder: RUGGALDIER, Diethard, D-96135 Stegaurach (DE); SEITZ, Johann, D-92224 Amberg (DE)
(86) Internationale Anmeldenummer: DE9400094
(87) Internationale Veröffentlichungsnummer: WO9520839

(56) Entgegenhaltungen:
- DE-A- 3 009 445
- US-A- 4 833 386
- US-A- 4 994 951

## Beschreibung

Die Erfindung betrifft ein Verfahren mit Phasenanschnittsteuerung zum Sanftauslauf eines Antriebs, insbesondere eines Pumpenantriebs, in Abhängigkeit des Phasenwinkels zwischen der Spannung und dem Strom des Antriebsmotors.

Verfahren mit Phasenanschnittsteuerung zum Sanftauslauf und Sanftanlauf von Antrieben, bei denen abhängig von dem Phasenwinkel zwischen der Motorspannung und dem Motorstrom geregelt wird, sind bekannt. An die Regelung beim Sanftauslauf werden besondere Anforderungen gestellt. Bei der Abschaltung von Pumpenantrieben durch abrupte Durchflußänderungen in Rohrleitungssystemen entstehen Druckschläge, die auch als "Wasserschlag" bezeichnet werden und das Leitungssystem nicht nur schädigen können, sondern zudem wegen der akustischen Beeinträchtigung störend wirken.

Die abrupte Durchflußänderung entsteht vor allem, wenn der Antrieb von Kreiselpumpen, z.B. durch Öffnen des zugehörigen Motorschützes, direkt abgeschaltet wird. Dabei besteht zwischen der Drehzahl und dem Durchfluß bzw. zwischen der Drehzahländerung und der Druckänderung folgender Zusammenhang. Der Durchfluß ist direkt proportional zur Pumpendrehzahl und die Druckveränderung ist direkt proportional dem Quadrat der Drehzahländerung.

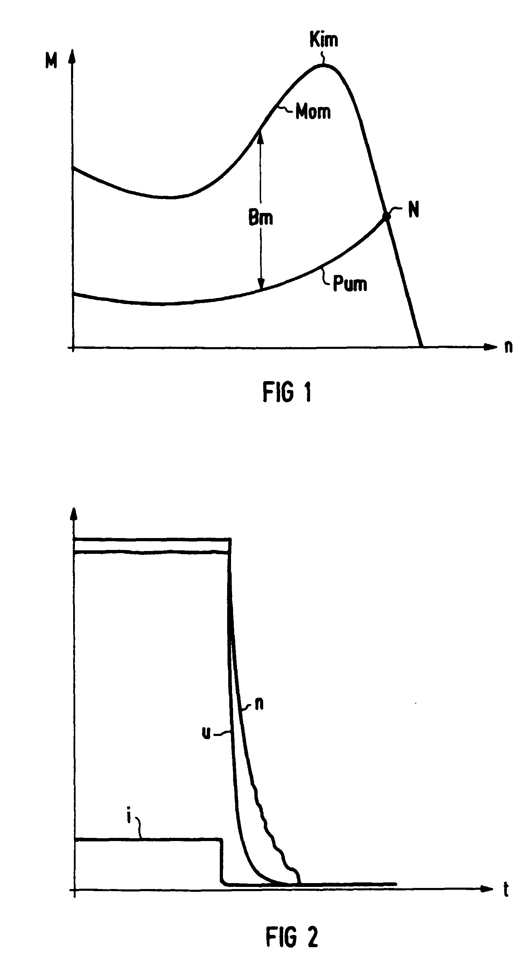

Bei der Direktabschaltung eines Pumpenantriebs mit Drehstrommotor kommt es wegen des Lastmomentverlaufs Pum entsprechend FIG 1 innerhalb kürzester Zeit zum Stillstand des Antriebs, da die Pumpe ein hohes Gegenmoment darstellt. In FIG 1 ist das Moment M über der Drehzahl n aufgetragen. Mit Mom ist das Motormoment, mit Pum das Lastmoment, mit Bm das Beschleunigungsmoment, mit Kim das Kippmoment und mit N der Nennbetriebspunkt bezeichnet. Aufgrund des hohen Gegenmoments Pum der Pumpe ergibt sich eine schnelle Änderung der Drehzahl n, die wegen der oben genannten Zusammenhänge eine schlagartige Änderung des Durchflusses und des Druckes bewirkt. Es kommt daraufhin zu einem Druckschwall, der als Wasserschlag bekannt ist. Vorhandene Rückschlagklappen verstärken das Problem.

In FIG 2 ist der zeitliche Verlauf von Motorstrom i, Motorspannung u und Drehzahl n bei Direktabschaltung dargestellt.

Als Gegenmaßnahmen wurden bisher verschiedene Methoden angewendet.

Durch Anbringen einer Schwungmasse am Pumpenantrieb kann verhindert werden, daß der Antrieb beim Abschalten sofort zum Stehen kommt. Die gespeicherte Energie der Schwungmasse führt zu einem verzögerten Auslauf der Pumpe, so daß die Druckänderung und Durchflußänderung verlangsamt wird. Diese Methode benötigt hohen mechanischen Aufwand, und für den Betrieb wird zusätzliche Leistung notwendig.

Durch Einsatz von Frequenzumrichtern kann der Pumpenmotor nach einer Drehzahlrampe von seiner Nenndrehzahl N auslaufen. Diese Methode ist vor allem bei größeren Pumpenleistungen vergleichsweise teuer.

Zum Aus- und Einschalten von Pumpenmotoren werden auch sogenannte Sanftanlaufgeräte eingesetzt, die nach dem Prinzip eines Drehstromstellers arbeiten. Neben der Möglichkeit eines Sanftanlaufs bieten diese Geräte auch die Möglichkeit eines Sanftauslaufs. Dabei wird durch Phasenanschnitt die Motorklemmenspannung nicht schlagartig abgeschaltet, sondern zurückgeregelt, so daß ebenfalls der Motor langsam ausläuft.

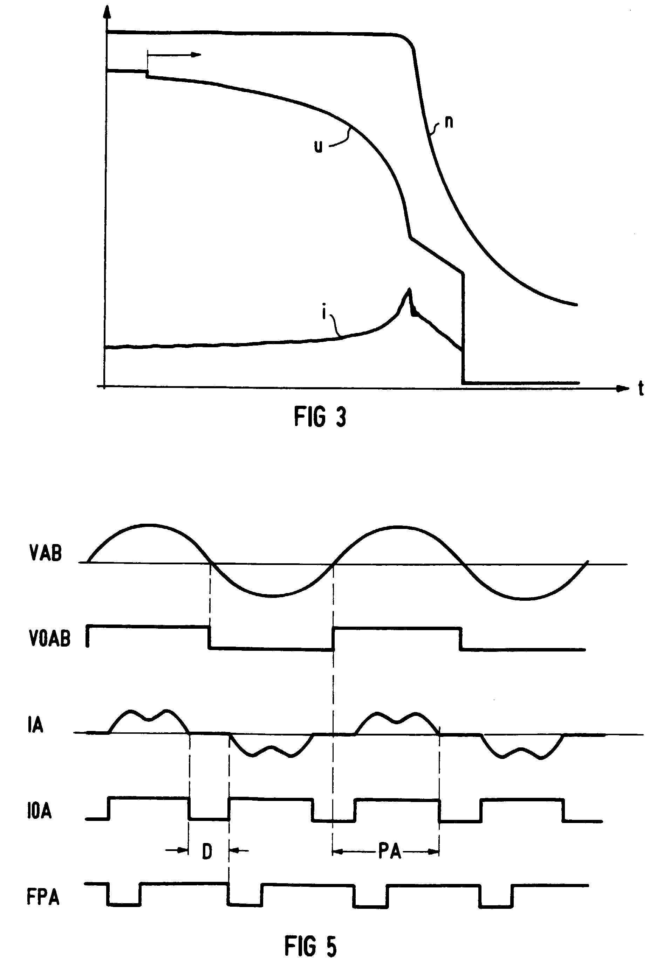

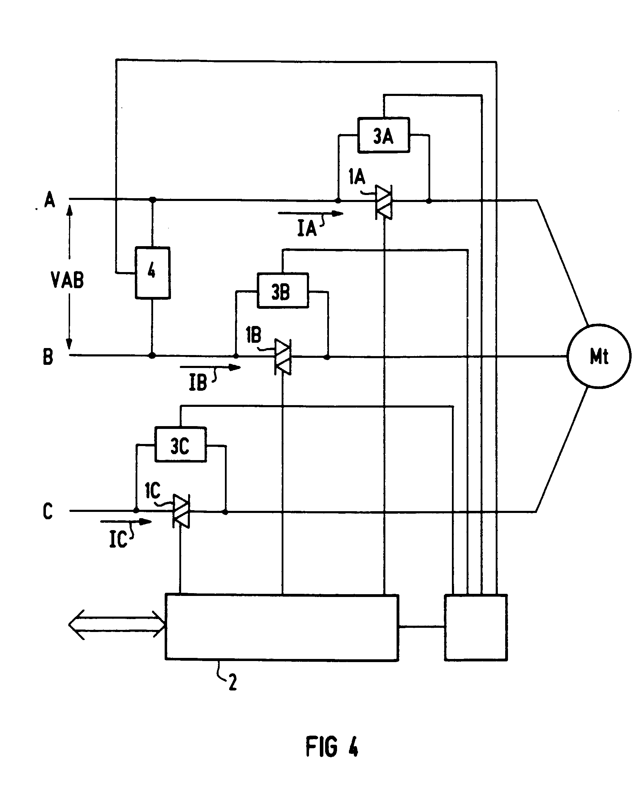

Dabei gibt es unterschiedliche Qualitäten des Sanftauslaufs: Die einfachste Art besteht darin, den Phasenanschnittwinkel beim Auslauf von Null Grad an linear zu vergrößern, bis der Motor zum Stehen kommt. Unterschreitet das hierbei reduzierte Motormoment das Lastmoment, kommt es zu einer schnellen Drehzahländerung gemäß FIG 3, die in den meisten Fällen wiederum einen Wasserschlag verursacht. Eine weitere Methode besteht darin, die Motorklemmenspannung zu erfassen und beim Auslaufen nach einer Rampe zu regeln. Zur Erfassung der Motorklemmenspannung ist jedoch zusätzliche Hardware erforderlich. Dabei ist erschwerend, daß die Spannung zum einen phasenangeschnitten ist und zum andern potentialfrei der Steuerung zur Verfügung gestellt werden muß. Durch die Erfassung und "Glättung" der Motorklemmenspannung entsteht bei einer einfachen Lösung eine Zeitverzögerung, die das Regelverhalten ungünstig beeinflussen kann.

Das vorliegende Phasenanschnittsteuerungsverfahren zum Sanftauslauf geht von der Betriebsweise eines bekannten Sanftanlaufgerätes gemäß FIG 4 aus, wie es aus der DE-OS 40 05 679 bekannt ist. Hier ist ein Drehstrommotor Mt über eine Thyristorschaltung aus antiparallelen Thyristoren 1A, 1B bzw. 1C an die drei Phasen A, B und C eines Drehstromnetzes angeschlossen. Die sechs Thyristoren können mittels einer geeigneten Zündschaltung 2 eingeschaltet werden. Befinden sich die Thyristoren nach einer Zündung im eingeschalteten Zustand, erlischt der Stromfluß beim Nulldurchgang des Stromes IA, IB, IC. Werden bei Wechselstromanwendung jeweils nach Erlöschen des Stromes die Thyristoren nach einer definierten Zeit wieder eingeschaltet, bezeichnet man dies als Phasenanschnittsteuerung. Die Verzögerung wird üblicherweise als Anschnittwinkel bezeichnet.

Der prinzipielle Aufbau des Sanftanlaufgerätes enthält neben der genannten Schaltung des Wechselstromstellers und den Zündschaltungen auch noch Erfassungsschaltungen 3A, 3B, 3C, die den Zustand eines Thyristorpaares anzeigen. Dabei werden nur die beiden Zustände "stromlos" und "stromführend" unterschieden, wie in FIG 5 durch die vierte Kurve IOA von oben für den Strom IA in der Phase A beispielhaft angegeben.

Ein Erfassungskreis 4, der ein netzsynchrones Signal aus der Netzspannung VAB liefert, dient als Synchronisiersignal (VOAB). Dieses Signal unterscheidet auch nur die beiden Zustände "Spannung positiv" oder "Spannung negativ" und leitet sich gemäß FIG 5 aus der Spannung VAB zwischen den beiden Phasen A und B gemäß FIG 5 ab.

Mit Hilfe der genannten Signale ist es möglich, den Phasenwinkel PA zwischen dem Motorstrom und der Spannung zu ermitteln.

Aus dem Signal, z.B. IOA, das den Zustand der einzelnen Thyristorpaare 1A, 1B, 1C anzeigt und insbesondere den Zeitpunkt des Stromnulldurchgangs wiedergibt, der durch die fallenden Flanken z.B. im Kurvenzug IOA angegeben ist, und dem Signal VOAB, das synchron zur Netzspannung VAB verläuft und insbesondere den Nulldurchgang der Netzspannung wiedergibt, wird der Phasenwinkel PA zwischen Motorspannung und Motorstrom ermittelt. Diese Zusammenhänge einschließlich der Zündwinkelansteuerung gemäß dem mit FPA bezeichneten Kurvenzug für das Thyristorpaar 1A in der Phase A sind aus der FIG 5 ersichtlich.

Der Erfindung liegt die Aufgabe zugrunde, ein einfaches Verfahren zum Sanftauslauf von Pumpenantrieben unter Vermeidung von Druckschlägen zu schaffen, so daß das Rohrleitungssystem nicht geschädigt wird und auch eine akustische Beeinträchtigung weitgehend vermieden wird. Dies wird erreicht mit einem Verfahren mit Phasenanschnittsteuerung zum Sanftauslauf eines Antriebs, insbesondere eines Pumpenantriebs, in Abhängigkeit des Phasenwinkels zwischen der Spannung und dem Strom des Antriebsmotors derart, daß die zeitliche Phasenwinkeländerung durch Vergrößerung des Phasenanschnittwinkels zunächst negativ ist, daß diese dann in einem Wendepunkt ihre Richtung ändert, daß ausgehend von dem momentanen Phasenwinkel bei Erfassung des Wendepunktes mit Hilfe eines Reglers der Phasenanschnittwinkel unter Vorgabe einer Phasenwinkel-Sollwertkurve als Eingangsgröße geregelt wird. Bei diesem Verfahren wird keine zusätzliche Hardware gegenüber der üblichen Steuerung für Sanftanlaufgeräte mit Phasenanschnittsteuerung benötigt. Für das Verfahren wird lediglich der Phasenwinkel zwischen Strom und Spannung benötigt, der bei üblichen Steuerungsverfahren entweder bereits vorliegt oder aus vorhandenen Informationen einfach abgeleitet werden kann.

Besonders einfach ist es, wenn der Phasenanschnittwinkel bis zur Erfassung des Wendepunktes linear erhöht wird. Außerdem ist es von Vorteil, wenn die Phasenwinkel-Sollwertkurve mit positiver zeitlicher Phasenwinkeländerung einen linearen Verlauf hat. Vorzugsweise liegt die Erhöhung des Phasenanschnittwinkels in einem Bereich von 15 bis 20 Grad pro Sekunde. Weiterhin ist es zweckmäßig, wenn die zeitlich lineare Erhöhung der Phasenwinkel-Sollwertkurve in einem Bereich von 0,5 bis 6 Grad pro Sekunde liegt. Ein besonders günstige Weiterbildung des genannten Verfahrens besteht, wenn die Regelung des Phasenanschnittwinkels unter Vorgabe der linearen Phasenwinkel-Sollwertkurve für die positive zeitliche Phasenwinkeländerung in folgenden Schritten erfolgt:
a) in äquidistanten Zeitschritten At wird der gemessene Phasenwinkel mit dem Phasenwinkel-Sollwert verglichen,
b) dabei wird dem Regler als Ausgangswert für die Referenz der momentane Phasenwinkel bei Erfassung des Wendepunktes zugeführt,
c) ist der nach dem Zeitschritt At gemessene Phasenwinkel größer als der Sollwert in diesem Zeitpunkt, wird der Phasenanschnittwinkel gegenüber dem letzten Wert um einen ersten Differenzwert reduziert, ansonsten wird zum letzten Wert der erste Differenzwert addiert,
d) der Referenzwert wird gemäß dem Sollwert beim nächsten Zeitschritt At um einen zweiten Differenzwert erhöht,
e) solange der sich neu ergebende Phasenanschnittwinkel kleiner als der größtmögliche Phasenanschnittwinkel ist, werden mit dem beim nächsten Zeitschritt At gemessenen Phasenwinkel und dem entsprechenden Referenzwert die beschriebenen Schritte wiederholt.

Um die Auslaufdauer beeinflussen zu können, ist vorteil-hafterweise die Steigung der linearen Phasenwinkel-Sollwertkurve einstellbar.

Ein Ausführungsbeispiel der Erfindung wird im folgenden anhand einer Zeichnung näher erläutert. Es zeigen:
- FIG 6: Ein Diagramm mit dem Phasenanschnittwinkel und dem Phasenwinkel über der Zeit,
- FIG 7: ein Ablaufdiagramm für die Phasenanschnittsteuerung,
- FIG 8: ein Diagramm zum Pumpenauslauf gemäß dem erfindungsgemäßen Verfahren.

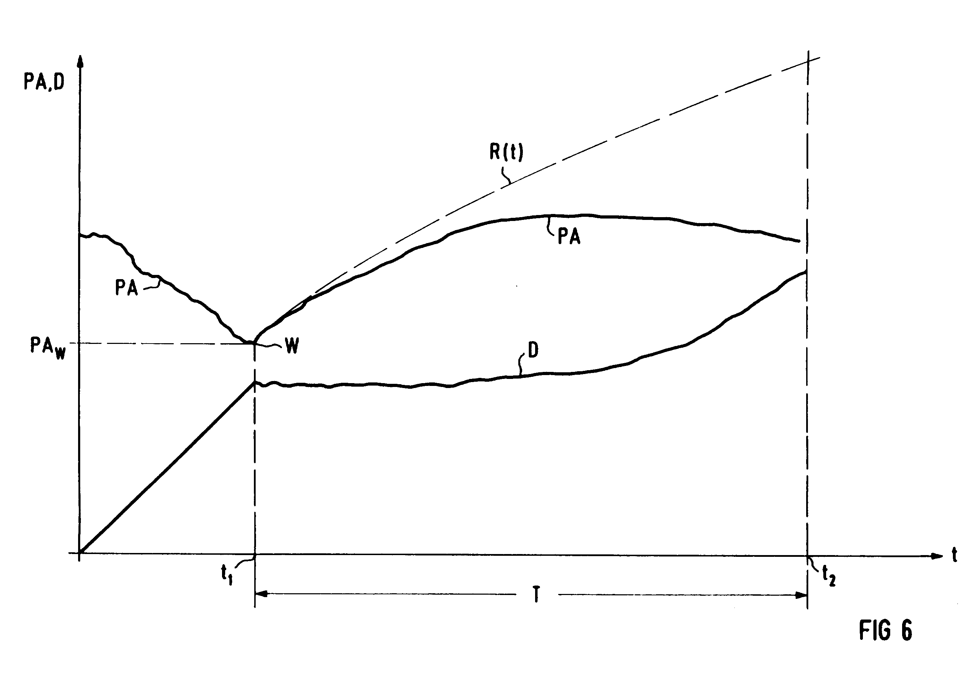

In FIG 6 ist das erfindungsgemäße Verfahren mit Phasenanschnittsteuerung zum Sanftauslauf eines Pumpenantriebs dargestellt. Bei Steuerung des Phasenanschnittwinkels D gemäß der unteren Kurve im Diagramm ergibt sich der Phasenwinkel PA zwischen der Spannung und dem Strom des Antriebsmotors gemäß der oberen Kurve. Zum Abschalten des Pumpenmotors wird zunächst beginnend mit einem Phasenanschnittwinkel D = 0° dieser nach einer linearen Rampe erhöht. Dies führt zu einer Absenkung der Motorspannung und die zeitliche Phasenwinkeländerung dPA/dt ist zunächst negativ. In jeder Netzperiode, d.h. in äquidistanten Zeitschritten Δt, wird z.B. nach der oben zum Stand der Technik beschriebenen Methode der Phasenwinkel PA ermittelt. Der Verlauf des Phasenwinkels PA wird während der linearen Erhöhung des Phasenanschnittwinkels D beobachtet und ausgewertet. Bei entsprechender Auswahl der Steigung für den linearen Anstieg des Phasenanschnittwinkels D im Bereich von 15 bis 20 Grad pro Sekunde ergibt sich im Verlauf des Phasenwinkels PA ein Wendepunkt W. Wird dieser Wendepunkt W detektiert, ist dies ein Indiz dafür, daß der Motor sich in dem Zustand befindet, in dem bei weiterer Reduzierung der Spannung das Pumpenmoment als Lastmoment das Motormoment überschreitet und es zu einem abrupten Drehzahlabfall kommt, der zum Wasserschlag führt. Ab diesem Zeitpunkt tl wird der Phasenanschnittwinkel D nicht mehr linear erhöht, sondern von einem Regler so beeinflußt, daß der Phasenwinkel PA nach dem Wendepunkt W möglichst nach einer linearen Rampe, d.h. einer Phasenwinkel-Sollwertkurve R(t) gemäß FIG 6, ansteigt. Dies hat zur Folge, daß die Motordrehzahl sich nicht abrupt ändert, da die Regelung die Motorspannung über den Phasenanschnittwinkel D so beeinflußt, daß keine schnelle Phasenwinkeländerung möglich ist. Wie aus der FIG 6 ersichtlich, folgt der gemessene Phasenwinkel PA physikalisch bedingt nicht der Phasenwinkel-Sollwertkurve R(t) im vorliegenden Ausführungsbeispiel. Hier ist in der ersten Phase nach dem Wendepunkt W der Phasenanschnittwinkel D zunächst nahezu konstant, d.h. auch die Motorspannung wird konstant gehalten, und erst zu einem späteren Zeitpunkt wird die Spannung durch Erhöhung des Phasenanschnittwinkels D gesenkt.

Die Regelung erfolgt beispielsweise mit einem PID-Regler, dessen Regelgröße der Phasenwinkel PA ist. Die Stellgröße ist der Phasenanschnittwinkel D für die Phasenanschnittsteuerung. Der Sollwert der Regelgröße erhöht sich nach der linearen Rampe R(t) ausgehend vom Momentanwert des Phasenwinkels PA_{W} bei der Detektion des Wendepunktes W bis zu einem Maximalwert. Die Steigung der linearen Rampe R(t) ist über den Parameter "Auslaufdauer" vorzugsweise einstellbar.

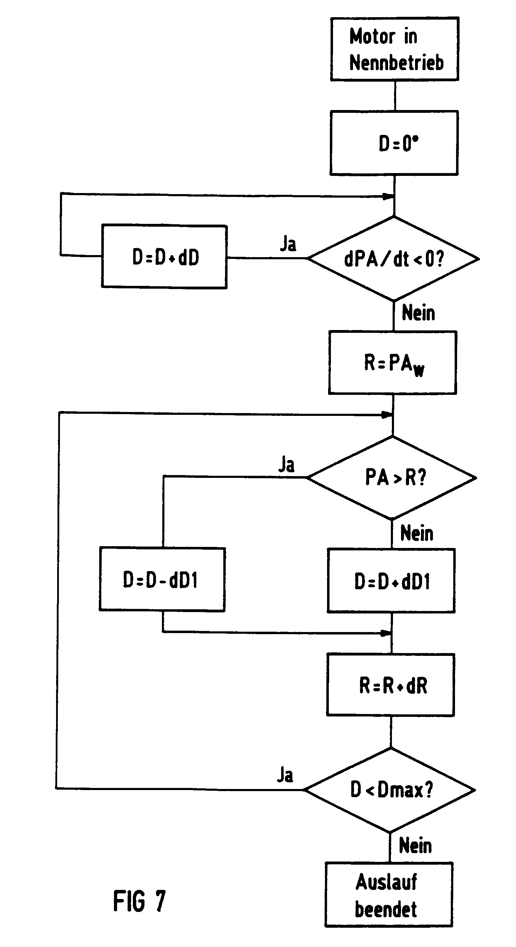

FIG 7 zeigt das Ablaufdiagramm für die erfindungsgemäße Phasenanschnittsteuerung. Danach wird der Phasenanschnittwinkel D ausgehend von Null Grad zunächst linear erhöht, was zu einer Absenkung des Phasenwinkel PA führt, d.h. eine negative zeitliche Phasenänderung dPA/dt zur Folge hat. Nach jedem Zeitschritt Δt, d.h. im vorliegenden Fall in jeder Netzperiode, wird der Phasenwinkel PA, wie eingangs beschrieben, gemessen. Ein erster Differenzwert der Phasenanschnittänderung dD für die lineare Rampe ist so berechnet, daß die Steigung zum einen nicht zu groß ist, da sonst der Kippunkt des Motors übersprungen werden kann, zum anderen aber nicht zu klein ist, da der Wendepunkt W sonst nicht detektiert werden kann. Ist die zeitliche Phasenwinkeländerung dPA/dt nicht mehr negativ, so ist dies das Indiz, daß der Wendepunkt W erreicht ist. Der entsprechende Phasenwinkel PA_{w} ist der Anfangssollwert bzw. der Referenzwert R für den Regler. Von diesem Zeitpunkt ab erfolgt die Phasenanschnittsteuerung über den Regler, dem als Sollwert bzw. Referenzwert die lineare Phasenwinkel-Sollwertkurve R(t) zugeführt wird, d.h. in einer Schleife wird der Phasenwinkelreferenzwert R jeweils um die Referenzänderung dR erhöht, die aus der vorgegebenen Auslaufdauer berechnet wird. Die Referenzänderung dR ergibt sich aus den Koordinaten PA_{W}, tl für den Wendepunkt W und der Bedingung, daß nach der vorgegebenen Auslaufdauer T im Zeitpunkt t₂ = t₁ + T der Phasenwinkel 120° betragen soll. Demzufolge berechnet sich die Referenzänderung dR innerhalb eines Zeitschritts At zu dR = [(120°-PA_{w}) /T]·Δt. Innerhalb der Schleife erfolgt eine Abfrage, ob der gemessene Phasenwinkel PA größer als der Referenzwert R ist oder nicht. Für den Fall PA größer R wird der Phasenanschnittwinkel D gegenüber dem letzten Wert um einen Differenzwert dD1 vermindert. Die Änderung dD1 wird beim vorliegenden Ausführungsbeispiel mit einem PID-Regler berechnet. Ist der Phasenwinkel PA jedoch kleiner oder gleich dem Sollwert R, erfolgt eine entsprechende Erhöhung des Phasenanschnittwinkel D um den Differenzwert dD1. Darauffolgend wird der Sollwert R für den Phasenwinkel um die Referenzänderung dR erhöht und damit wieder der nächste Regelungsschritt eingeleitet bis der gemessene Phasenanschnittwinkel Dₘₐₓ als größtmöglicher Ansteuerwinkel D erreicht ist. Damit ist der Sanftauslauf für den Pumpenantrieb beendet.

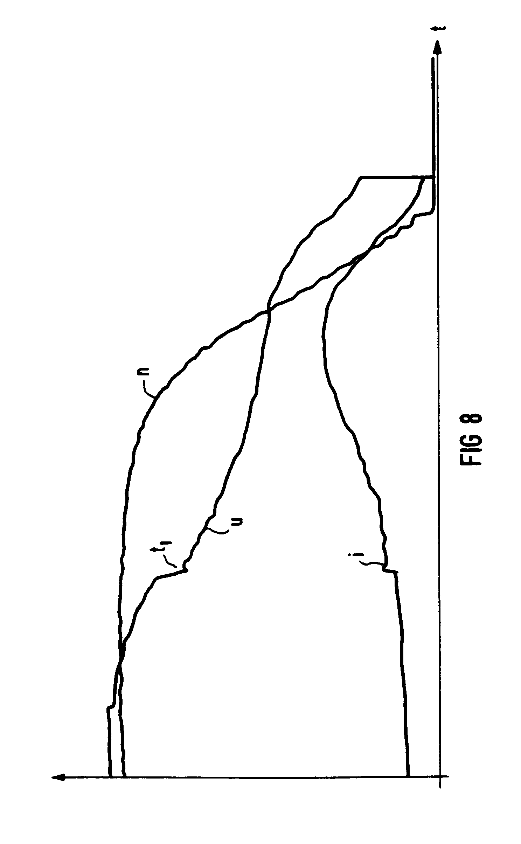

In FIG 8 ist der zeitliche Verlauf von Motorstrom i, Motorspannung u und Motordrehzahl n für einen Sanftauslauf eines Pumpenantriebs gemäß dem erfindungsgemäßen Verfahren mit Phasenanschnittsteuerung dargestellt. Durch die gesteuerte Spannungsabsenkung wird ein Drehzahlverlauf ohne abruptes Absacken erreicht. Die Drehzahl n nimmt anfangs langsam aber kontinuierlich ab und geht dann in einen linearen Bereich mit größerer Steilheit über. Die Steigung dieses linearen Absenkungsbereiches hängt von der Vorgabe für die Steigung der linearen Phasenwinkel-Sollwertkurve R(t) ab und kann über die "Auslaufdauer" eingestellt werden.

## Patentansprüche

1. Verfahren mit Phasenanschnittsteuerung zum Sanftauslauf eines Antriebes, insbesondere eines Pumpenantriebes, in Abhängigkeit des Phasenwinkels (PA) zwischen der Spannung und dem Strom des Antriebsmotors derart, daß die zeitliche Phasenwinkeländerung beim Auslauf durch Vergrößerung des Phasenanschnittwinkels (D) zunächst negativ ist, daß diese dann in einem Wendepunkt (W) ihre Richtung ändert, daß ausgehend von dem momentanen Phasenwinkel (PA_{w}) bei Erfassung des Wendepunktes (W) mit Hilfe eines Reglers der Phasenanschnittwinkel (D) unter Vorgabe einer Phasenwinkel-Sollwertkurve (R(t)) als Eingangsgröße geregelt wird.

2. Verfahren mit Phasenanschnittsteuerung, **dadurch gekennzeichnet**, daß der Phasenanschnittwinkel (D) bis zur Erfassung des Wendepunktes (W) linear erhöht wird.

3. Verfahren mit Phasenanschnittsteuerung nach Anspruch 1, **dadurch gekennzeichnet,** daß die Phasenwinkel-Sollwertkurve (R(t)) einen linearen Verlauf mit positiver zeitlicher Phasenwinkeländerung hat.

4. Verfahren mit Phasenanschnittsteuerung nach Anspruch 1 oder 2, **dadurch gekennzeichnet,** daß die zeitlich lineare Erhöhung des Phasenanschnittwinkels (D) in einem Bereich von 15 bis 20 Grad pro Sekunde liegt.

5. Verfahren mit Phasenanschnittsteuerung nach Anspruch 3 und 4, **dadurch gekennzeichnet,** daß die zeitlich lineare Erhöhung der Phasenwinkel-Sollwertkurve (R(t)) in einem Bereich von 0,5 bis 6 Grad pro Sekunde liegt.

6. Verfahren mit Phasenanschnittsteuerung nach einem der vorangehenden Ansprüche, **dadurch gekennzeichnet,** daß die Regelung des Phasenanschnittwinkels (D) unter Vorgabe der linearen Phasenwinkel-Sollwertkurve (R(t)) in folgenden Schritten erfolgt:
a) in äquidistanten Zeitschritten At wird der gemessene Phasenwinkel (PA) mit dem Phasenwinkel-Sollwert (R(t)) verglichen,
b) dabei wird dem Regler als Ausgangswert für die Referenz der momentane Phasenwinkel (PA_{W}) bei Erfassung des Wendepunktes (W) zugeführt,
c) ist der nach dem Zeitschritt Δt gemessene Phasenwinkel (PA) größer als der Sollwert (R(t)) in diesem Zeitpunkt, wird der Phasenanschnittwinkel (D) gegenüber dem letzten Wert um einen ersten Differenzwert (dD1) reduziert, ansonsten wird zum letzten Wert der erste Differenzwert (dD1) addiert,
d) der Referenzwert (R) wird gemäß dem Sollwert (R(t)) beim nächsten Zeitschritt Δt um einen zweiten Differenzwert (dR) erhöht,
e) solange der sich neu ergebende Phasenanschnittwinkel (D) kleiner als der größtmögliche Phasenanschnittwinkel (Dₘₐₓ) ist, werden mit dem beim nächsten Zeitschritt At gemessenen Phasenwinkel (PA) und dem entsprechenden Referenzwert (R) die beschriebenen Schritte wiederholt.

7. Verfahren mit Phasenanschnittsteuerungsverfahren nach einem der vorangehenden Ansprüche, **dadurch gekennzeichnet,** daß die Steigung der linearen Phasenwinkel-Sollwertkurve (R(t)) einstellbar ist.

## Claims

1. Phase control method for smoothly stopping a drive, in particular a pump drive, as a function of the phase angle (PA) between the voltage and the current of the drive motor so that the change in phase angle over time during stopping is at first negative on account of the increase in the phase control angle (D), that it then changes directions at a turning point (W), that, starting from the instantaneous phase angle (PA_{w}) when the turning point (W) is detected, the phase control angle (D) is regulated with the aid of a controller with a preselected phase angle reference curve (R(t)) as an input parameter.

2. Phase control method, characterised in that the phase control angle (D) increases linearly until the turning point (W) is detected.

3. Phase control method according to claim 1, characterised in that the phase angle reference curve (R(t)) is linear with a positive change in phase angle over time.

4. Phase control method according to claim 1 or 2, characterised in that the linear increase in the phase control angle (D) over time lies in a range of 15° to 20° per second.

5. Phase control method according to claims 3 and 4, characterised in that the linear increase in the phase angle reference curve over time (R(t)) lies in a range of 0.5° to 6° per second.

6. Phase control method according to one of the preceding claims, characterised in that the phase control angle (D) is regulated in the following steps, with a preselected linear phase angle reference curve (R(t)):
a) the measured phase angle (PA) is compared with the phase angle reference (R(t)) at equidistant time increments Δt;
b) in this connection, the instantaneous phase angle (PA_{w}) is fed to the controller as the starting value for the comparison value when the turning point (W) is detected;
c) if the phase angle (PA) measured after the time increment Δt is greater than the reference (R(t)) at that time, the phase control angle (D) is reduced by a first differential value (dD1) in relation to the latest value; otherwise the first differential value (dD1) is added to the latest value;
d) the comparison value (R) is increased by a second differential value according to the reference (R(t)) at the next time increment Δt;
e) the steps which have been described are repeated with the phase angle (PA) measured at the next time increment Δt and the corresponding comparison value (R), as long as the resulting new phase control angle (D) is smaller than the largest possible phase control angle (Dₘₐₓ).

7. Phase control method according to one of the preceding claims, characterised in that it is possible to adjust the slope of the linear phase angle reference curve (R(t)).

## Revendications

1. Procédé à commande de retard de phase pour ralentir en douceur un dispositif d'entraînement, notamment un dispositif d'entraînement de pompe, en fonction de l'angle (PA) de phase entre la tension et le courant du moteur d'entraînement, caractérisé en ce que la variation dans le temps de l'angle de phase lors du ralentissement est d'abord négative en raison de l'accroissement de l'angle (D) de retard de phase, en ce que cette variation change ensuite de direction en un point (W) d'inflexion, en ce que, à partir de l'angle (PA_{w}) de phase présent au moment de la détection du point (W) d'inflexion, on règle à l'aide d'un régulateur l'angle (D) de retard de phase selon ce qui est prescrit par une courbe R(t) de valeurs consigne d'angle de phase comme grandeur d'entrée.

2. Procédé à commande de retard de phase caractérisé en ce que l'on augmente linéairement l'angle (D) de retard de phase jusqu'à la détection du point (W) d'inflexion.

3. Procédé à commande de retard de phase suivant la revendication 1, caractérisé en ce que la courbe R(t) de valeurs de consigne d'angle de phase a un tracé linéaire à variation positive en fonction du temps de l'angle de phase.

4. Procédé à commande de retard de phase suivant la revendication 1 ou 2, caractérisé en ce que l'accroissement linéaire en fonction du temps de l'angle (D) de retard de phase est dans un intervalle de 15 à 20 degrés par seconde.

5. Procédé à commande de retard de phase suivant la revendication 3 et 4, caractérisé en ce que l'accroissement linéaire en fonction de la courbe R(t) de valeurs de consigne d'angle de phase est dans un intervalle de 0,5 à 6 degrés par seconde.

6. Procédé à commande de retard de phase suivant l'une des revendications précédentes, caractérisé en ce que l'on effectue la régulation de l'angle (D) de retard de phase selon ce que prescrit la courbe R(t) de valeurs consigne d'angle de phase par les étapes suivantes:
a) à des pas Δt de temps équidistants, on compare l'angle (PA) de phase à la valeur (R(t)) de consigne d'angle de phase,
b) on envoie alors au régulateur l'angle (PA_{w}) de phase présent lors de la détection du point (W) d'inflexion comme grandeur de départ de référence,
c) si l'angle (PA) de phase mesuré après le pas Δt de temps est plus grand que la valeur (R(t)) de consigne à cet instant, on réduit d'une première valeur (dD1) de différence l'angle (D) de retard de phase par rapport à la dernière valeur, sinon on additionne à la dernière valeur la première valeur (dD1) de différence,
d) suivant la valeur (R(t)) de consigne au prochain pas Δt de temps, on augmente la valeur (R) de référence d'une deuxième valeur (dR) de différence,
e) tant que l'angle (D) de retard de phase qui est nouvellement obtenu est plus petit que le plus grand angle (Dₘₐₓ) de retard de phase possible, on répète les étapes décrites avec l'angle (PA) de phase mesuré au pas Δt de temps suivant et la valeur (R) de référence correspondante.

7. Procédé à commande de retard de phase suivant l'une des revendications précédentes, caractérisé en ce que l'on peut régler la pente de la courbe R(t) linéaire de valeurs de consigne d'angle de phase.
